# EUROPEAN PATENT APPLICATION

(11) **EP 4 703 014 A1**
(43) Date of publication of application: **04.03.2026**
(21) Application number: 25193978.1
(22) Date of filing: 05.08.2025
(51) Int. Cl.: A62C 3/16, A62C 31/02, A62C 37/36

(54) **FIRE EXTINGUISHING AGENT SPRAYING APPARATUS AND METHOD FOR BATTERY MODULE AND SPRAYING UNIT FOR SPRAYING APPARATUS**

(30) Priority: 03.09.2024 KR 20240119627
(71) Applicant: SAMSUNG SDI CO., LTD., Yongin-si, Gyeonggi-do 17084 (KR)
(72) Inventor: KIM, Taejin, Yongin-si, Gyeonggi-do 17084 (KR); YANG, Jongwoon, Yongin-si, Gyeonggi-do 17084 (KR)
(74) Representative: Gulde & Partner

(57) **Abstract**

The present disclosure relates to a fire extinguishing agent spraying apparatus (50), method for a battery module (17) and a spraying unit (60) for the spraying apparatus (50). The apparatus (50) includes the spraying unit (60) including a spraying tube (65) configured to supply a fire extinguishing agent through an internal passage into a battery module (17), and a plug (67) configured to block the internal passage and to separate from the spraying tube (65) by an external force. A fire extinguishing agent supply unit (54) is connected to the spraying tube (65) through an agent supply pipe (55), with the fire extinguishing agent supply unit (54) being configured to supply the fire extinguishing agent to the spraying tube (65) such that the fire extinguishing agent pushes the plug (67) out of the spraying tube (65) and is sprayed into the battery module (17). To expedite the pushing of the pug (67) out of the spraying tube (65), the plug (67) is heated.

## Description

### BACKGROUND

### 1. Field of the Invention

The present disclosure relates to a spraying apparatus and method for spraying a fire extinguishing agent for a battery module, and more specifically, to a fire extinguishing agent spraying apparatus and method for a battery module and a spraying unit for the spraying apparatus.

### 2. Discussion of Related Art

Unlike primary batteries that may not be recharged, secondary batteries are batteries that may be charged and discharged. Low-capacity batteries are used in small portable electronic devices such as smartphones, feature phones, laptop computers, digital cameras, and camcorders. Large-capacity batteries are widely used as power sources for driving motors in hybrid electric vehicles, electric vehicles, and the like, as power storage batteries, and the like. Secondary batteries include an electrode assembly that includes positive and negative electrodes, a case that accommodates the electrode assembly, an electrode terminal connected to the electrode assembly, and the like.

A plurality of batteries may be gathered to form an energy storage device with expanded voltage and/or current capacity. Energy storage devices may include battery modules/packs used in vehicles or electrical appliances.

In the event of a fire inside the module or when there is a risk of fire, an apparatus and method capable of quickly responding thereto are required. As a technology for extinguishing a fire inside the battery module, a method is provided in which a tube is installed inside of a module and a fire extinguishing agent is sprayed through the tube. However, with such a conventional fire extinguishing device it is difficult to install the tube inside the module and the tube is expensive.

The above information disclosed in this Background section is for enhancement of understanding of the background of the present disclosure, and therefore, it may contain information that does not constitute a related (or prior) art.

### SUMMARY OF THE INVENTION

The present disclosure is directed to providing a fire extinguishing agent spraying apparatus and method for a battery module and a spraying unit for the spraying apparatus, which are capable of being automatically operated to take immediate actions when there is a risk of fire or in the event of a fire and easily installed with a simple structure.

According to one aspect of the present disclosure, there is provided a spraying unit for a fire extinguishing agent spraying apparatus according to claim 1.

According to another aspect of the present disclosure, there is provided a fire extinguishing agent spraying apparatus for a battery module according to claim 6.

According to still another aspect of the present disclosure, there is provided a method of spraying a fire extinguishing agent into a battery module using a fire extinguishing agent spraying apparatus according to claim 14.

According to an aspect of the disclosure, a fire extinguishing agent spraying apparatus for a battery module is provided. The apparatus may comprise a spraying unit including a spraying tube configured to supply a fire extinguishing agent through an internal passage to the battery module and a plug that configured (i) to block the internal passage and (ii) to separate from the spraying tube by an external force. The apparatus may comprise a fire extinguishing agent supply unit connected to the spraying tube through an agent supply pipe, the fire extinguishing agent supply unit being configured to supply the fire extinguishing agent to the spraying tube such that the fire extinguishing agent pushes the plug out of the spraying tube and is sprayed into the battery module.

According to an embodiment, the fire extinguishing agent spraying apparatus may further comprise a tube heating unit configured to transfer heat to the plug through the spraying tube to thereby melt the plug and expedite separation of the plug from the spraying tube. The spraying tube may be made of a metal. The plug may be made of a plastic material that is meltable.

According to an embodiment, the tube heating unit may comprise a heating element fixed to an outer circumferential surface of the spraying tube. According to an embodiment, the tube heating unit may comprise a power supply unit connected to the heating element through a power line and configured to apply power to the heating element to heat the heating element.

According to an embodiment, the agent supply pipe may comprise a pressure adjuster configured to adjust a flow pressure of the fire extinguishing agent being supplied to the spraying tube. According to an embodiment, the agent supply pipe may comprise a pressure sensor configured to detect an internal pressure of the agent supply pipe. According to an embodiment, the agent supply pipe may comprise a controller connected to the pressure sensor and configured to control the pressure adjuster.

According to an embodiment, the fire extinguishing agent spraying apparatus may further comprise an air compressor configured to inject compressed air into a compressed air pipe. According to an embodiment, the fire extinguishing agent spraying apparatus may further comprise a valve that opens or closes the agent supply pipe, with the valve being installed between the spraying unit and the pressure adjuster. The compressed air pipe may be connected between the spraying unit and the valve. The air compressor may be configured to inject the compresses air into the compressed air pipe when the valve is closed.

According to an embodiment, the fire extinguishing agent spraying apparatus may further comprise a suction body mounted on the battery module. The suction body may be configured to suction gas inside the battery module when the fire extinguishing agent is sprayed from the spraying tube. According to an embodiment, the fire extinguishing agent spraying apparatus may further comprise a vacuum pump configured to provide a negative pressure to the suction body.

According to an embodiment, the spraying unit may further comprise a case that accommodates the heating element and a portion of the spraying tube. The case may be fixed or may be adapted to be fixed to outside of the battery module. Hence, according to another aspect of the disclosure, a battery module comprising the fire extinguishing agent spraying apparatus is disclosed.

According to an embodiment, the fire extinguishing agent spraying apparatus may further comprise a heat pipe connecting the plug to the heating element. The heating pipe may be configured to transfer heat from the heating element to the plug. According to an embodiment, the fire extinguishing agent spraying apparatus may further comprise a heat receiver configured to receive heat from inside the battery module and transfer the heat to the plug.

According to yet another aspect of the disclosure, a spraying unit for a fire extinguishing agent spraying apparatus is provided. The spraying unit may comprise a spraying tube configured to be installed outside a battery module. The spraying tube configured to spray a fire extinguishing agent supplied from an external fire extinguishing agent supply unit through an agent supply pipe into the battery module. The spraying unit may comprise a plug that blocks a passage of the spraying tube. The plug may be configured to separate from the spraying tube by pressure from the fire extinguishing agent. The spraying unit may comprise a heating element configured to generate heat. The heating element may be configured to generate heat by power that is externally supplied to heat the plug. The heating element may be configured to heat the plug so as to expedite separation of the plug from the spraying tube.

According to an embodiment, the spraying unit may further comprise a case that accommodates the heating element and a portion of the spraying tube. The case may be configured to be fixed to outside of the battery module.

According to an embodiment, the spraying unit may further comprise an insulator provided inside the case. The insulator may surround the heating element at least partly or even completely. The heating element may at least partly or even completely be embedded in the insulator. The insulator may be a thermal insulator.

According to an embodiment, the spraying unit may further comprise a heat pipe. The heat pipe may connect the heating element to the plug. The heat pipe may be configured to transfer heat from the heating element to the plug.

According to an embodiment, the spraying unit may further comprise a heat receiver. The heat receiver may be configured to receive heat from inside the battery module. The heat receiver may be configured to apply heat and for example heat received from inside the battery module to the plug.

According to still another aspect of the disclosure, a method of spraying a fire extinguishing agent into a battery module is provided. The method may use a fire extinguishing agent spraying apparatus, e.g. a fire extinguishing agent spraying apparatus according to an aspect of the disclosure. The fire extinguishing agent spraying apparatus, when used, may comprise a spraying tube having an internal passage through which the fire extinguishing agent passes and which sprays the fire extinguishing agent into the battery module, a plug that blocks the internal passage of the spraying tube and is separated from the spraying tube by an external force, a fire extinguishing agent supply unit that supplies the fire extinguishing agent to the spraying tube so that the fire extinguishing agent pushes the plug out of the spraying tube and is sprayed into the battery module, and a tube heating unit that transfers heat to the plug to melt the plug to expedite separation of the plug from the spraying tube. The method may comprise a monitoring operation of monitoring at least one of a temperature and a voltage of at least one cell inside the battery module. The method may comprise a fire extinguishing agent supply operation of supplying the fire extinguishing agent to the spraying tube when at least one of the temperature and the voltage of the at least one cell is out of a normal range. The method may comprise an opening expedition operation of expediting opening of the spraying tube using the tube heating unit.

According to an embodiment, the method may further comprise subsequent process of or to the opening expedition operation, an air pushing operation to supply compressed air to the spraying tube and apply air pressure to the plug, e.g. by driving an air compressor. According to an embodiment, a pressure adjuster may be installed on an agent supply pipe to adjust a flow and/or pressure of the fire extinguishing agent being supplied to the spraying tube. According to an embodiment, a first valve may be installed between a spraying unit and the pressure adjuster to open and close the agent supply pipe. According to an embodiment, a compressed air pipe may be connected to the spraying unit and the first valve. According to an embodiment, the air compressor may inject the compressed air to the compressed air pipe when the first valve is closed. According to an embodiment, the air pushing operation may be performed when the first valve is closed.

Embodiments of the invention are subject of the dependent claims. Aspects and features of the present disclosure are not limited to those described above, and other aspects and features not specifically mentioned herein will be clearly understood by those skilled in the art from present disclosure below.

### BRIEF DESCRIPTION OF THE DRAWINGS

The drawings attached to the present specification illustrate embodiments of the present disclosure and further describe aspects and features of the present disclosure together with the detailed description of the present disclosure. The present disclosure is not limited to embodiments depicted in the drawings.
FIG. 1 schematically shows a pouch-type battery;
FIG. 2 is a cross-sectional view of a cylindrical battery;
FIG. 3A is a top perspective view showing the exterior of a prismatic battery;
FIG. 3B is a cross-sectional view along line A-A' of FIG. 3A;
FIG. 4 is an exemplary view of a battery module in which batteries are arranged;
FIG. 5 is a view showing a configuration of a fire extinguishing agent spraying apparatus according to one embodiment of the present disclosure;
FIG. 6 is a perspective view showing the exterior of a spraying unit according to one embodiment of the present disclosure;
FIG. 7 is a view showing a modified example of a fire extinguishing agent spraying apparatus according to one embodiment of the present disclosure;
FIG. 8 is a view showing another modified example of the fire extinguishing agent spraying apparatus according to one embodiment of the present disclosure;
FIG. 9 is a partial cross-sectional view for describing an internal configuration of the spraying unit according to one embodiment of the present disclosure;
FIG. 10 is a cross-sectional view of a conductive tube and a plug shown in FIG. 9;
FIGS. 11 to 15 are partial cross-sectional views showing various modified examples of the spraying unit according to one embodiment of the present disclosure; and
FIG. 16 is a flowchart for describing a fire extinguishing agent spraying method according to one embodiment of the present disclosure.

### DETAILED DESCRIPTION OF EXEMPLARY EMBODIMENTS

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various modifications that can replace or modify one or more embodiments or features described herein.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections are not limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Numerical ranges disclosed and/or recited herein include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein includes all lower numerical limitations subsumed therein, and any minimum numerical limitation recited in this specification includes all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and does limit the present disclosure.

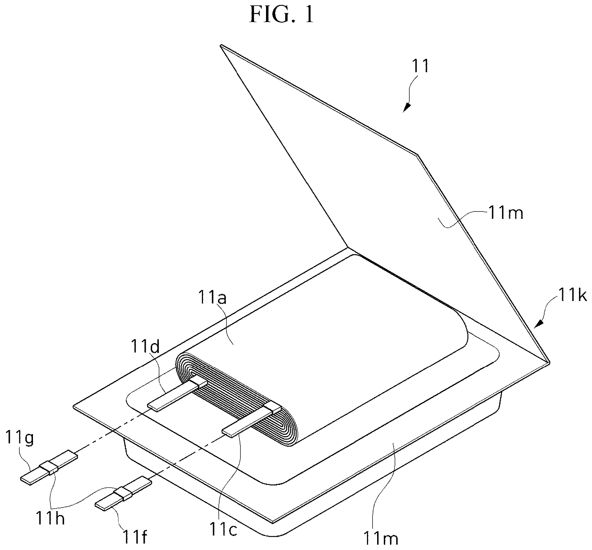

FIG. 1 schematically illustrates the pouch-type secondary battery.

The pouch-type secondary battery 11 includes an electrode assembly 11a and a pouch 11k that accommodates the electrode assembly 11a.

The first electrode tab 11c and the second electrode tab 11d of the electrode assembly 11a may be electrically connected to respective external first and second terminal leads 11f and 11g by welding. Each of the first terminal lead 11f and the second terminal lead 11g may be attached with a tab film 11h for insulation from the pouch 11k.

The pouch 11k may be sealed by having sealing parts 11m at the edges thereof contact each other with the electrode assembly 11a accommodated therein, in which case the sealing may be achieved with the tab film 11h interposed between the sealing parts 11m. The sealing parts 11m of the pouch 11k may each be made of a thermal fusion material that generally has weak adhesion to metal. Thus, the electrode assembly 11a may be fused to the pouch 11k by interposing the thin tab film 11h between the sealing parts 11m.

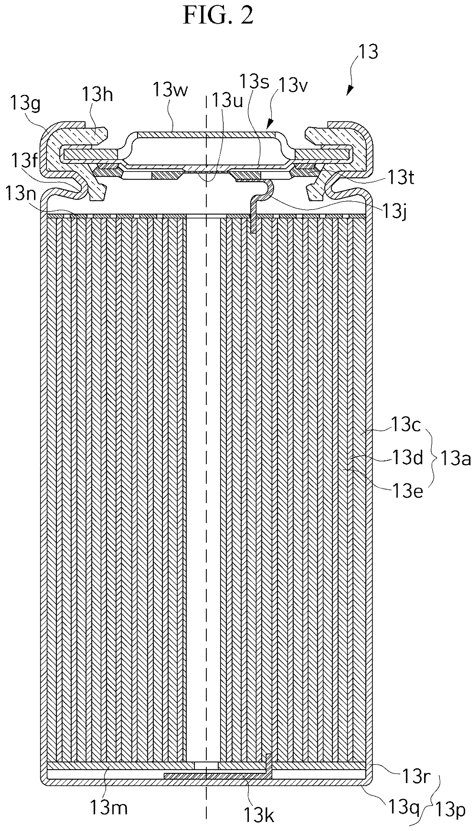

FIG. 2 illustrates a cylindrical secondary battery 13. As shown in FIG. 2 the secondary battery includes an electrode assembly 13a, a case 13p accommodating the electrode assembly 13a and an electrolyte therein, a cap assembly 13v coupled to an opening of the case 13p to seal the case 13p, and an insulating plate 13n positioned between the electrode assembly 13a and the cap assembly 13v inside the case.

The electrode assembly 13a may include a separator 13d interposed between a first electrode 13e and a second electrode 13c positioned. The electrode assembly 13a may be wound in so-called a jelly-roll shape.

The first electrode 13e includes a first substrate and a first active material layer on the first substrate. A first lead tab 13j may extend outwardly from a first uncoated portion of the first substrate where the first active material layer is not provided, and the first lead tab 13j may be electrically connected to the cap assembly 13v.

The second electrode 13c includes a second substrate and a second active material layer on the second substrate. A second lead tab may extend outwardly from a second uncoated portion of the second substrate where the second active material layer is not provided, and the second lead tab may be electrically connected to the case. The first lead tab 13j and the second lead tab may extend in opposite directions.

The first electrode 13e may act as a positive electrode. In such an embodiment, the first substrate may be made of, for example, an aluminum foil, and the first active material layer may include, for example, a transition metal oxide. The second electrode 13c may act as a negative electrode. In such an embodiment, the second substrate may be made of, for example, a copper foil or a nickel foil, and the second active material layer may include, for example, graphite.

The separator 13d prevents a short circuit between the first electrode 13e and the second electrode 13c while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the secondary battery. The case 13p may have a substantially cylindrical body portion 13r and a bottom portion 13q connected to one side (e.g., to one end) of the body portion 13r. A beading part 13f (e.g., a bead) deformed inwardly may be formed in the body portion 13r, and a crimping part 13g (e.g., a crimp) bent inwardly may be formed at an open end of the body portion 13r.

The beading part 13f can reduce or prevent movement of the electrode assembly 13a inside the case 13p and can facilitate seating of a gasket 13h and the cap assembly 13v. The crimping part 13g may firmly fix the cap assembly 13v by pressing the edge of the case 13p against the gasket 13h. The case 13p may be formed of iron plated with nickel, for example.

The cap assembly 13v may be fixed to the inside of the crimping part 13g by a gasket 13h to seal the case 13p. The cap assembly 13v may include an upper cap 13w, a safety vent 13s, a lower cap 13t, an insulating member, and a sub plate 13u. But the present disclosure is not limited to the depicted configuration and may be modified in various ways.

The upper cap 13w may be positioned at the uppermost part of the cap assembly 13v. The upper cap 13w may include a terminal part that protrudes upwardly and is connected to an external circuit. The upper cap 13w may also include an outlet for discharging gas that is arranged around the terminal part.

The safety vent 13s may be located under the upper cap 13w. The safety vent 13s may include a protrusion part that protrudes convexly downwardly and is connected to the sub plate 13u. One or more notches may be formed in the safety vent around the protrusion part.

When gas is generated due to overcharging or abnormal operation or maloperation of the secondary battery, the protrusion part is deformed upwardly by the pressure and separate from the sub plate 13u while the safety vent 13s is cut (e.g., bursts or tears) along the notch. The cut safety vent 13s may prevent the secondary battery from exploding by allowing for the gas to be discharged to outside of the battery.

The lower cap 13t may be positioned below the safety vent 13s. The lower cap 13t may have a first opening formed therein for exposing the protrusion part of the safety vent 13s and a second opening for gas discharge. The insulating member may be positioned between the safety vent 13s and the lower cap 13t to insulate the safety vent 13s and the lower cap 13t.

The sub plate 13u may be under the lower cap 13t. The sub plate 13u may be fixed to a lower surface of the lower cap 13t to block the first opening of the lower cap 13t, and the protrusion part of the safety vent 13s may be fixed to the sub plate 13u. The first lead tab 13j, which is drawn out from the electrode assembly 13a may be fixed to the sub plate 13u. Accordingly, the upper cap 13w, the safety vent 13s, the lower cap 13t, and the sub plate 13u may be electrically connected to the first electrode 13e of the electrode assembly 13a.

The insulating plate 13n may be positioned in contact with the electrode assembly 13a below the beading part 13f. The insulating plate 13n may have a tab opening through which the first lead tab 13j is drawn out. The cap assembly 13v, which is electrically connected to the first electrode by the first lead tab 13j, may face the electrode assembly with the insulating plate 13n interposed therebetween, with the insulating plate 13n thereby providing insulation (e.g., electrically insulated) between the cap assembly 13v and the electrode assembly 13a, Another insulating plate 13m may be included for insulation between the electrode assembly 13a and the bottom portion 13q of the case 13p.

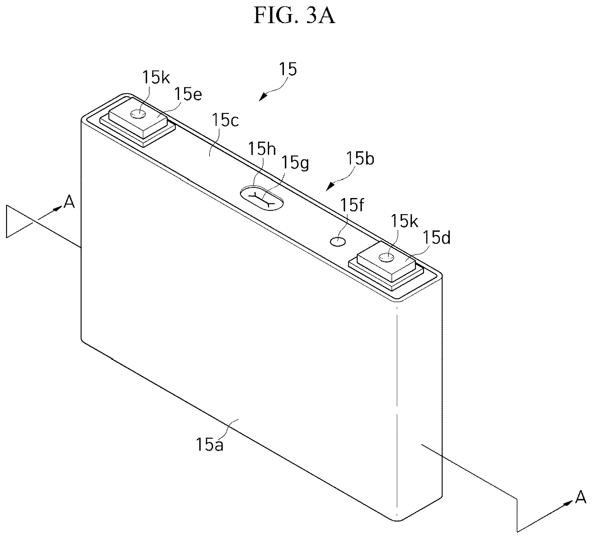

FIG. 3A is a top perspective view of a prismatic secondary battery 15, according to some embodiments of the present disclosure.

A case 15a defines an overall appearance of the prismatic secondary battery. The case 15a may be made of a conductive metal, such as aluminum, aluminum alloy, or nickel-plated steel. In addition, the case 15a may provide a space for accommodating an electrode assembly therein.

A cap assembly 15b may include a cap plate 15c that covers the opening of the case 15a. In some examples, the case 15a and the cap plate 15c may be made of a conductive material. A first terminal 15e and a second terminal 15d may be electrically connected to respective positive and negative (or negative and positive) electrodes inside the case, and may be installed to protrude outward through the cap plate 15c.

The cap plate 15c may include an electrolyte injection port 15f formed and a sealing plug (or seal pin) installed therein. A vent 15h may be formed with a notch 15g for discharging gas generated inside the secondary battery.

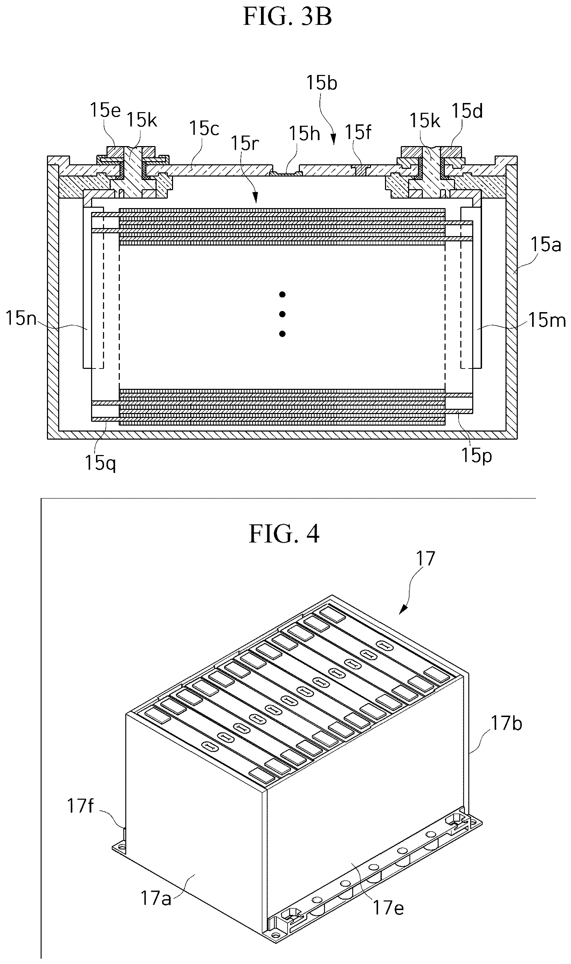

FIG. 3B is a cross-sectional view taken along the line A-A of FIG. 3A, according to some embodiments of the present disclosure.

As shown in FIG. 3B, a prismatic secondary battery may include an electrode assembly 15r, a first current collector 15m, a first terminal 15d, a second current collector 15n, a second terminal 15e, a case 15a, and a cap assembly 15b.

The electrode assembly 15r may be formed by winding or stacking a first electrode plate(s), a separator(s), and a second electrode plate(s), which are formed as thin plates or films. When the electrode assembly 15r is a wound stack, a winding axis may be parallel to the longitudinal direction of the case 15a. In some other embodiments, the electrode assembly 15r is a stack type rather than a winding type, and the shape of the electrode assembly 15r is not limited in the present disclosure. In addition, the electrode assembly 15r may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case. The number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 15p (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut to protrude to one side of the electrode assembly 15r, or the first electrode tab 15p may protrude to one side of the electrode assembly 15r more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut to protrude to the other side (e.g., the opposite side) of the electrode assembly when the second electrode plate is manufactured, or the second electrode tab 15q may protrude to the other side of the electrode assembly more than (e.g., farther than or beyond) the separator without being separately cut.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, the electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively. In some embodiments in which the first electrode tab 15p and the second electrode tab 15q are located at the top of the electrode assembly 15r, the first and second current collectors are located at the top of the electrode assembly 15r.

As illustrated in FIG. 3B, the first current collector 15m and the second current collector 15n are connected to the first terminal 15d and the second terminal 15e, respectively, through connection members 15k. In some embodiments, the connection members 15k may each have an outer peripheral surface that is threaded and may thereby be fastened to the first terminal 15d and the second terminal 15e by screwing. However, the present disclosure is not limited to such a configuration. For example, the connection members 15k may also be coupled to the first terminal 15d and the second terminal 15e by riveting or welding.

FIG. 4 is a perspective view of a secondary battery module 17 in which secondary batteries are arranged according to embodiments of the present disclosure. With the increasing need for secondary battery capacity for driving electric vehicles, energy storage system (ESS), or the like, a secondary battery module may be manufactured by arranging a plurality of secondary battery cells transversely and/or longitudinally and connecting them together. The plurality of secondary batteries may be arranged in a space defined by a pair of facing end plates 17a and 17b and a pair of facing side plates 17e and 17f. The secondary batteries may be arranged in an arrangement (direction) and number to obtain desired voltage and current specifications.

Often there is a risk of fire and explosion of the battery module 17 due to various causes. A fire extinguishing agent spraying apparatus 50 of the present disclosure to be described below has a configuration for quickly spraying a fire extinguishing agent into the battery module to more effectively extinguish a fire.

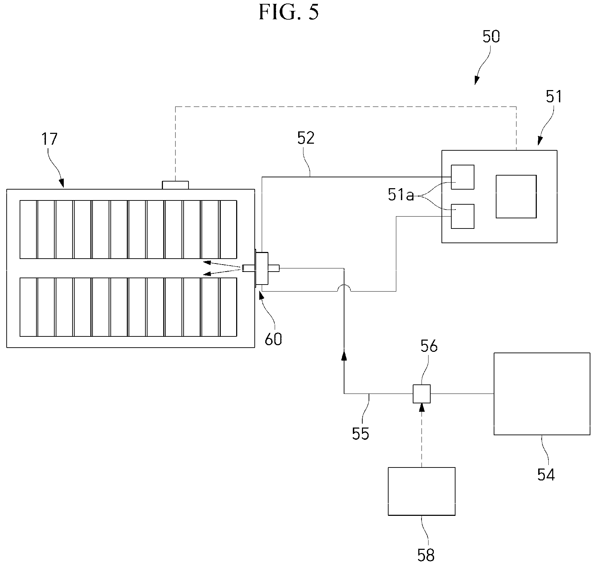

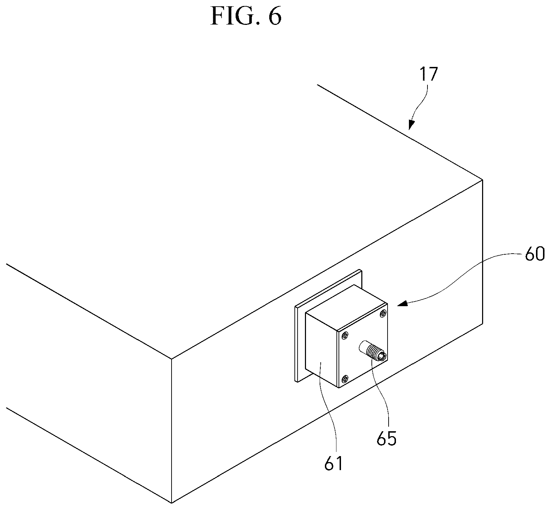

FIG. 5 is a view showing a configuration of a fire extinguishing agent spraying apparatus 50 according to one embodiment of the present disclosure, and FIG. 6 is a perspective view showing the exterior of a spraying unit according to one embodiment of the present disclosure. The spraying unit 60 according to the present embodiment will be described together with the spraying apparatus 50.

The fire extinguishing agent spraying apparatus 50 shown in FIG. 5 includes the spraying unit 60, a battery management system (BMS) 51, a power supply unit 51a, a fire extinguishing agent supply unit 54, a controller 58, and a pressure adjuster 56.

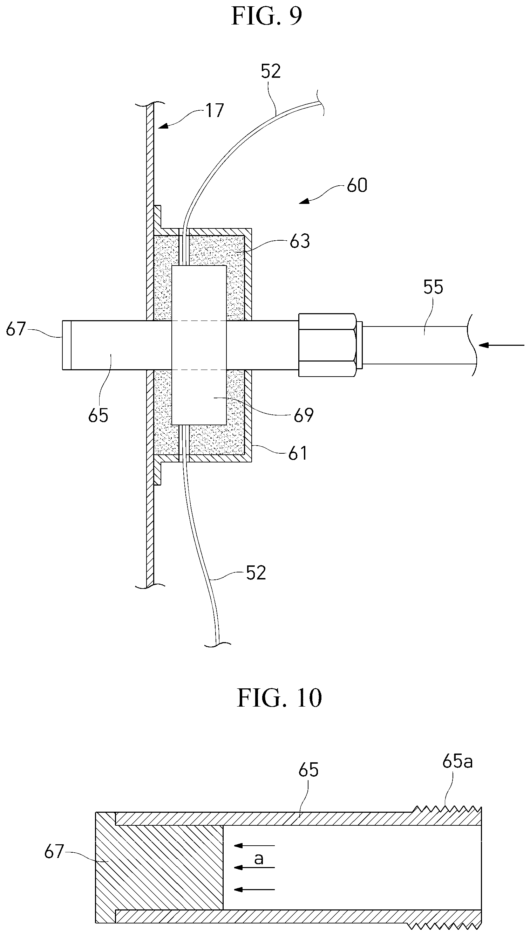

The spraying unit 60 direct a fire extinguishing agent provided from the fire extinguishing agent supply unit 54 and spray the fire extinguishing agent into the battery module 17. The spraying unit 60 may include a spraying tube 65 and a plug 67 (see Fig. 9). An embodiment of the spraying unit 60 has the configuration shown in FIGS. 9 and 10.

As shown in FIGS. 9 and 10, the spraying unit 60 may include a spraying tube 65, the plug 67, a heating element 69, and a case 61.

The spraying tube 65 may be installed outside the battery module 17 and may spray the fire extinguishing agent provided from the fire extinguishing agent supply unit 54 into the battery module 17. The spraying tube 65 is a straight pipe having a constant diameter and a front-end portion thereof may be inserted into the battery module 17. The front-end portion is an end portion from which the fire extinguishing agent is sprayed. The size of the spraying tube 65 may vary depending on the size of the battery module 17.

A connector 65a may be provided at a rear end portion of the spraying tube 65. The connector 65a is a part to which an agent supply pipe 55 is connected. The agent supply pipe 55 is a pipe that connects the fire extinguishing agent supply unit 54 to the spraying tube 65. The connection method of the agent supply pipe 55 to the spraying tube 65 may be implemented in various ways.

The spraying tube 65 may function as a nozzle to spray the fire extinguishing agent supplied through the agent supply pipe 55 into the battery module. The spraying tube 65 may be made of a metal with good thermal conductivity. For example, the spraying tube 65 may be made of copper or aluminum. Since the fire extinguishing agent in this description is general and such fire extinguishing agents are known in the art, a description of the fire extinguishing agent will be omitted.

The plug 67 is a fusible plastic member fixedly attached to the front-end portion of the spraying tube 65. The plug 67 may melt when heat is applied. As will be described below, the plug 67 may melt by heat conducted and received through the spraying tube 65. The reason for melting the plug 67 is to make it easier to separate the plug 67 from the spraying tube 65.

The plug 67 may block the passage of the spraying tube 65 and may be separated from the spraying tube 65 by a pressure of the fire extinguishing agent in a direction of arrows a. When the plug 67 is removed from the spraying tube 65, the fire extinguishing agent may be sprayed into the battery module 17. The pressure in the direction of the arrows a may be greater or less than a frictional force of the plug 67 against the spraying tube 65. When the pressure of the fire extinguishing agent is greater than the frictional force, the plug 67 is pushed out by only a supply pressure of the fire extinguishing agent. However, when the pressure of the fire extinguishing agent is less than the frictional force, the plug 67 may melt in the case of a fire. As the plug 67 melts, the plug 67 may be pushed out with a lower pressure from the fire extinguishing agent. The supply pressure of the fire extinguishing agent may be adjusted through the pressure adjuster 56. Preferably, the plug is configured to melt to such that the pressure of the fire extinguishing agent needed to push out the plug 67 may be lower. This may be advantageous because the higher pressure of the fire extinguishing agent, the louder noise when the plug 67 is separated.

The heating element 69 may generate heat by the power applied from the power supply unit 51a and thereby heat the spraying tube 65. The heat transferred to the spraying tube 65 is transferred to the plug 67 through a conduction process to thereby melt the plug. The heating element 69 is connected to the power supply unit 51a through a power line 52. The heating element 69 may be a coil wound around the spraying tube 65. The heating element 69 may melt the plug 67 to expedite the separation of the plug 67 from the spraying tube 65. Here, "expedite" means that the plug 67 is separated with a lower pressure (pressure in the direction of the arrows a in FIG. 10).

The heating element 69 and the power supply unit 51a are tube heating units that transfer heat to the plug 67 through the spraying tube 65 to partially melt the plug 67, thereby expediting the separation of the plug 67 from the spraying tube 65. Any type of tube heating device capable of heating the spraying tube 65 may be used.

In addition, as shown in FIG. 9, the spraying unit 60 may further include the case 61. The case 61 is a box-shaped member that accommodates the heating element 69 and a portion of the spraying tube 65 and is fixed to an outer surface of the battery module 17. An insulator 63 may be installed inside the case 61. The insulator 63 surrounds the heating element 69, thereby preventing the heat of the heating element 69 from being lost .

As shown in FIG. 5, the fire extinguishing agent supply unit 54 may be connected to the spraying tube 65 through the agent supply pipe 55. The fire extinguishing agent supply unit 54 may pressure-feed the fire extinguishing agent toward the spraying tube 65. The pressure-fed fire extinguishing agent presses the plug 67 in the direction of the arrows a of FIG. 10. For example, the fire extinguishing agent pushes the melted plug 67 out and is sprayed into the battery module. In another embodiment, the plug 67 may be separated from the spraying tube by increasing the pressure of the fire extinguishing agent, in which case the plug 67 is not melted.

The pressure adjuster 56 may be further installed on the agent supply pipe 55. The pressure adjuster 56 may adjust a flow pressure of the fire extinguishing agent being supplied to the spraying tube 65. The pressure adjuster 56 may be a fluid pump. The pressure adjuster 56 may be controlled by the controller 58. Thus, the controller 58 may increase or decrease the supply pressure of the agent.

The power supply unit 51a may be connected to the heating element 69 through the power line 52 and may supply power to the heating element 69 to heat the heating element 69. The heating element 69 may be operated by the BMS 51. However, the heating element 69 may also be operated separately from the BMS 51. The BMS 51 monitors a state of the battery module 17 in real time, controls charging and discharging, and protects the battery module from risks such as overcharging, overdischarging, and overheating.

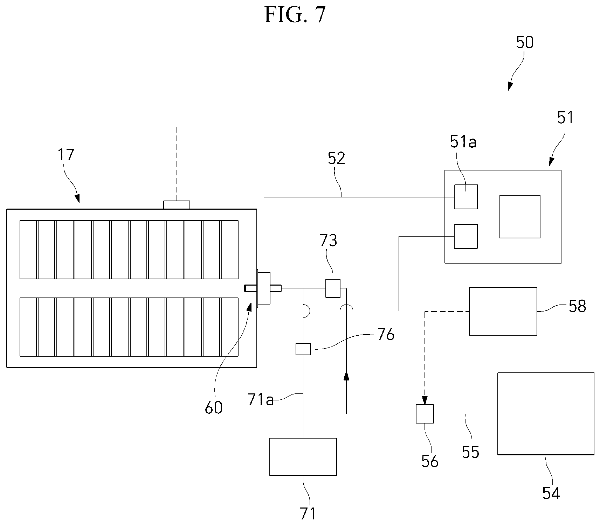

FIG. 7 is a view showing a modified example of the fire extinguishing agent spraying apparatus 50 according to an embodiment of the present disclosure.

Hereinafter, the same drawing symbols as the above-described drawing symbols denote the same members having the same functions.

As shown, a first valve 73 may be further mounted on the agent supply pipe 55. The first valve 73 may be located between the spraying unit 60 and the pressure adjuster 56. The first valve 73 is opened and closed to supply and block the fire extinguishing agent through the agent supply pipe 55. The first valve 73 is controlled by the controller 58.

In addition, a compressed air pipe 71a may be connected between the spraying unit 60 and the first valve 73, with an air compressor 71 being installed at an end portion of the compressed air pipe 71a. The air compressor 71 may inject compressed air into the compressed air pipe 71a when the first valve 73 is closed. The air injected into the compressed air pipe 71a enters the spraying tube 65 and presses the plug 67 in the direction of the arrows a in FIG. 10. Thus, the compressed air may be used to eject the plug 67 from the supply tube 65.

In addition, a second valve 76 may be installed on the compressed air pipe 71a. The second valve 76 may be opened when the first valve 73 is closed and closed when the first valve 73 is opened. The second valve 76 may also be controlled by the controller 58.

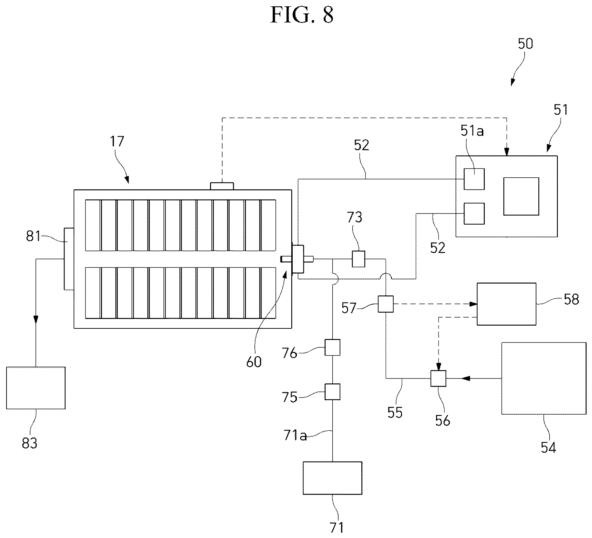

FIG. 8 is a view showing another modified example of the fire extinguishing agent spraying apparatus 50 according to an embodiment of the present disclosure.

As shown, an accumulator 75 may be further installed on the compressed air pipe 71a. The accumulator 75 is located between the second valve 76 and the air compressor 71, accumulates air supplied from the air compressor 71, and then supplies the accumulated air to the spraying tube 65 all at once. Through the accumulator 75, compressed air at a higher pressure may be provided to the spraying tube 65.

In addition, a pressure sensor 57 is installed between the first valve 73 and the pressure adjuster 56. The pressure sensor 57 may detect an internal pressure of the agent supply pipe 55. Pressure information detected by the pressure sensor 57 is transmitted to the controller 58, which controls the pressure adjuster 56 based on the pressure information received from the pressure sensor 57. By using the pressure sensor 57, the pressure adjuster 56 may be driven more accurately.

A suction body 81 may be installed at the opposite side of the battery module 17 from the spraying unit 60. The suction body 81 receives a negative pressure from a vacuum pump 83. A plurality of suction holes (not shown) may be formed in the suction body 81. The suction body 81 suctions gas inside the battery module 17 when the fire extinguishing agent is sprayed from the spraying tube 65. When the vacuum pump 83 provides the negative pressure to the suction body 81, the gas (heated air, gas, or the like) inside the battery module 17 is discharged to outside of the battery module 17. It is possible to inject the fire extinguishing agent more quickly when the suction action of the suction body 81 is provided.

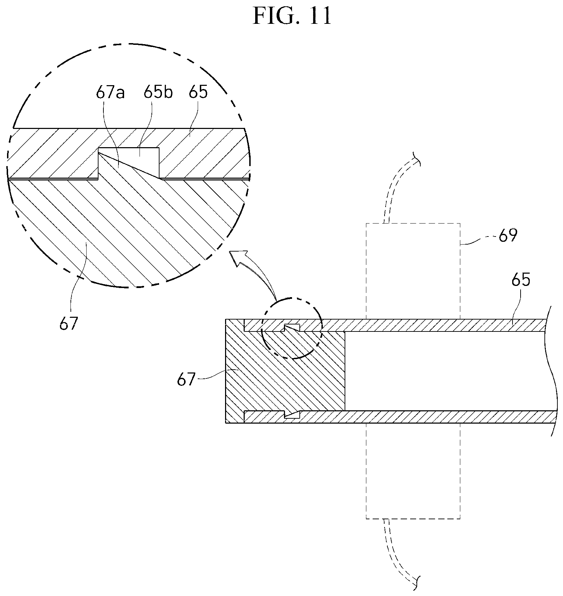

FIGS. 11 to 15 are partial cross-sectional views showing various modified examples of the spraying unit according toan embodiment of the present disclosure. For convenience, the case 61 and the insulator 63 are omitted.

The spraying tube 65 shown in FIG. 11 has a support groove 65b formed in an inner circumferential surface thereof. The support groove 65b has the shape of a ring extending in a circumferential direction of the inner circumferential surface. In addition, a locking protrusion 67a is provided on an outer circumferential surface of the plug 67. The locking protrusion 67a may be a triangular protrusion that is inserted into the support groove 65b. The outer circumferential surface of the plug 67 including the locking protrusion 67a may be melted by heat transferred from the heating element 69.

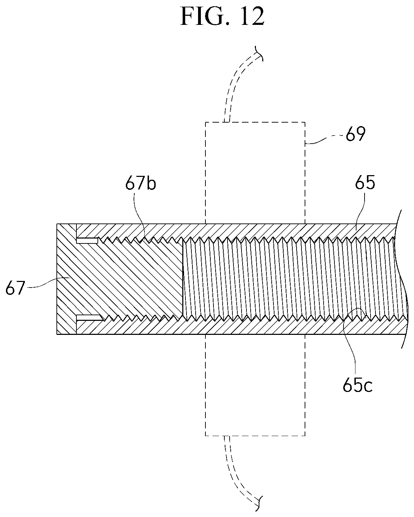

A female thread portion 65c is formed on the inner circumferential surface of the spraying tube 65 of FIG. 12, and a male thread portion 67b is formed on the plug 67. By screw-coupling the male thread portion 67b to the female thread portion 65c, a coupling state of the plug 67 is maintained. In addition, by rotating the plug 67 clockwise or counterclockwise, an engagement area of the screw thread of the plug 67 with respect to the spraying tube 65 may be adjusted. Of course, the smaller the engagement area, the less a force that is required to push out the plug 67 from the spraying tube 65.

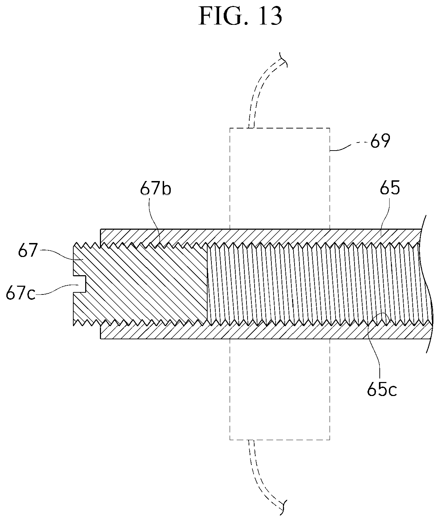

The plug 67 of FIG. 13 may have the form of a headless bolt. In addition, a driver groove 67c into which an end portion of a driver may be inserted is formed in the plug 67. By rotating the plug 67 using the driver, the engagement area of the plug 67 with respect to the spraying tube 65 may be adjusted.

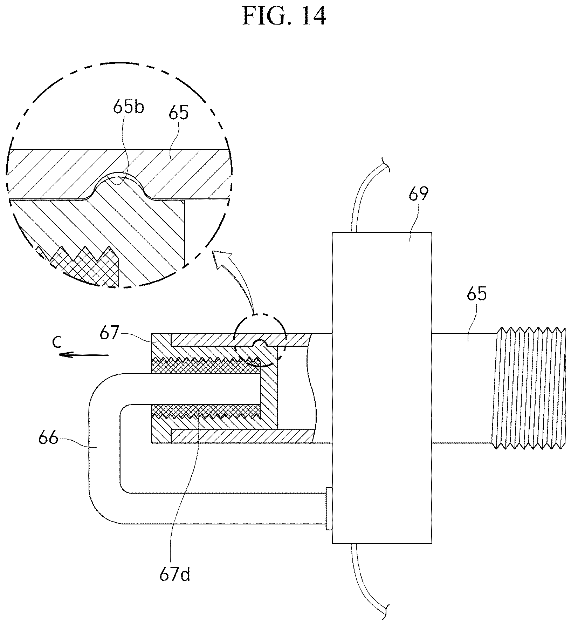

The spraying unit 60 shown in FIG. 14 has a heat pipe 66 between the plug 67 and the heating element 69. In addition, the plug 67 is provided with a metal holder 67d. The metal holder 67d is a hollow cylinder made of aluminum or copper and is connected to one end portion of the heat pipe 66.

The heat pipe 66 connects the plug 67 to the heating element 69 and transfers some heat of the heating element 69 to the plug 67. Some heat output from the heating element 69 is transferred to the plug 67 through the spraying tube 65, and the remaining heat is directly transferred to the plug 67 through the heat pipe 66. Thus, heat may be applied simultaneously from the outside and inside of the plug 67 thereby making the plug 67 melt faster.

In particular, the heat pipe 66 may be deformed by an external force. For example, the plug 67 may be physically deformed when the plug 67 is separated in a direction of an arrow c by the pressure of the press-fitted fire extinguishing agent. That is, a bent portion of the heat pipe 66 may be unfolded by an external force. Thus, the heat pipe 66 does not interfere with the unplugging of the plug (i.e., when the plug being pulled out in the direction of the arrow c).

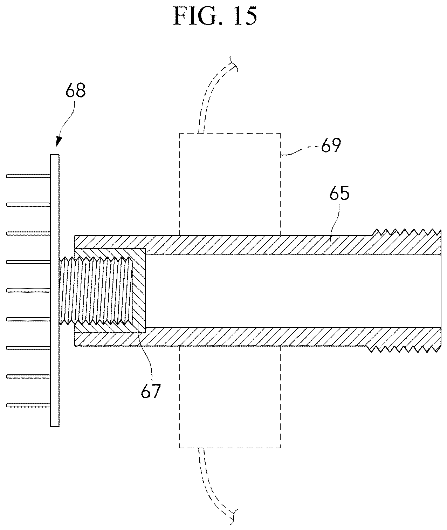

As shown in FIG. 15, a heat receiver 68 may be mounted on the plug 67. The heat receiver 68 may be located inside the battery module 17. The heat receiver 68 may absorb heat generated inside the battery module and transfer the absorbed heat to the plug 67. The heat receiver 68 may take the form of a heat sink and may be screw-coupled to the plug 67. The structure of the heat receiver 68 may be in any form as long as it transfers the heat inside the battery module to the plug 67.

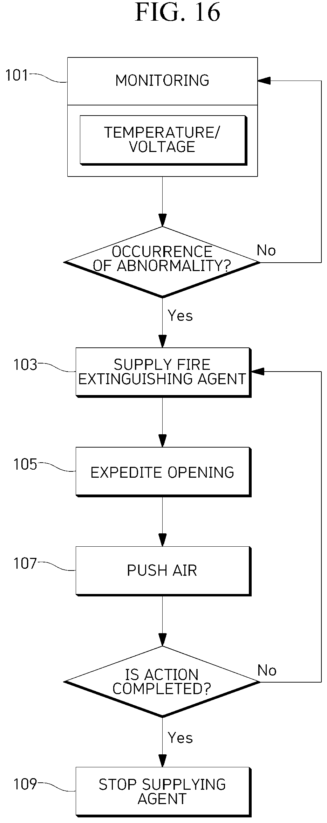

FIG. 16 is a flowchart for describing a fire extinguishing agent spraying method according to an embodiment of the present disclosure. The method for spraying a fire extinguishing agent may use the above-described fire extinguishing agent spraying apparatus.

The fire extinguishing agent spraying method according to the present embodiment includes a monitoring operation 101, a fire extinguishing agent supply operation 103, an opening expedition operation 105, an air pushing operation 107, and an agent supply stopping operation 109.

The monitoring operation 101 is a process of monitoring at least one of a temperature and a voltage of the cells inside the battery module 17 using the BMS 51.

When abnormality occurs during the performance of the monitoring operation 101, the fire extinguishing agent supply operation 103 is performed. The abnormality may be, for example, that the temperatures of the cells are higher than a set value or an output voltage is out of an allowable range.

The fire extinguishing agent supply operation 103 is a process of supplying the fire extinguishing agent from the fire extinguishing agent supply unit 54. The supplied fire extinguishing agent flows into the spraying tube 65 through the agent supply pipe 55 and presses the plug 67 in the direction of the arrows a in FIG. 10. During the fire extinguishing agent supply operation 103, the flow pressure of the agent may also be adjusted using the pressure adjuster 56.

The opening expedition operation 105 is a process of expediting the opening of the spraying tube 65 by heating the spraying tube 65 using the tube heating units. That is, the power supply unit 51a and the heating element 69 melt the plug 67. In other words, the opening expedition operation 105 is a process of melting the plug 67 so that the plug 67 may be more easily separated from the spraying tube 65 by the pressure from the fire extinguishing agent.

The subsequent air pushing operation 107 is a process of driving the air compressor 71 to supply compressed air to the spraying tube 65 and applying an air pressure to the plug 67 in a state in which the first valve 73 (see FIG. 8) is closed and the second valve 76 is opened. The air pushing operation 107 may be performed when the plug 67 is not separated even though the opening expedition operation 105 is performed. Depending on the situation, the air pushing operation 107 may not be performed.

When the plug 67 is removed through the opening expedition operation 105 and the air pushing operation 107, the fire extinguishing agent is sprayed into the battery module 17. The sprayed fire extinguishing agent extinguishes the fire when a fire has already occurred and prevents the occurrence of the fire by cooling cells when there are signs of fire.

When an action such as the fire extinguishing or cooling is completed through the above process, the agent supply stopping operation 109 is performed. The agent supply stopping operation 109 is a process of stopping the operation of the fire extinguishing agent supply unit 54. After the supply of the fire extinguishing agent is stopped through the agent supply stopping operation 109, subsequent processing is performed on the battery module 17.

A fire extinguishing agent spraying apparatus and method in a battery module of the present disclosure can be operated automatically to take immediate actions when there is a risk of fire or in the event of a fire based on temperature and voltage change data of a cell in a module.

In addition, since a fire extinguishing agent spraying apparatus of the present disclosure is installed outside the battery module, the fire extinguishing agent spraying apparatus does not occupy a space in the module and does not hinder the compactness of the module.
Although the present disclosure has been described above with respect to embodiments, the present disclosure is not limited to described embodiments. Various modifications and variations can be made thereto by those skilled in the art within the present disclosure.

## Claims

1. A spraying unit (60) for a fire extinguishing agent spraying apparatus (50), comprising:
a spraying tube (65) configured to be installed outside a battery module (17) and to spray a fire extinguishing agent supplied from an external fire extinguishing agent supply unit (54) through an agent supply pipe (55) into the battery module (17);
a plug (67) that blocks a passage of the spraying tube (65) and is configured to separate from the spraying tube (65) by pressure from the fire extinguishing agent; and
a heating element (69) configured to generate heat by power that is externally supplied to heat the plug (67) so as to expedite separation of the plug (67) from the spraying tube (65).

2. The spraying unit (60) as claimed in claim 1, further comprising a case (61) that accommodates the heating element (69) and a portion of the spraying tube (65), the case (61) being configured to be fixed to outside of the battery module (17).

3. The spraying unit (60) as claimed in claim 2, further comprising an insulator (63) provided inside the case (61) and surrounding the heating element (69).

4. The spraying unit (60) as claimed in any of claims 1 to 3, further comprising a heat pipe (66) connecting the heating element (69) to the plug (67) and configured to transfer heat from the heating element (69) to the plug (67).

5. The spraying unit (60) as claimed in any of claims 1 to 4, further comprising a heat receiver (68) configured to receive heat from inside the battery module (17) and apply the heat to the plug (67).

6. A fire extinguishing agent spraying apparatus (50) for a battery module (17), the apparatus comprising:
a spraying unit (60) according to any of claims 1 to 5, including the spraying tube (65) configured to supply the fire extinguishing agent through an internal passage to the battery module (17) and the plug (67) that configured (i) to block the internal passage and (ii) to separate from the spraying tube (65) by an external force; and
a fire extinguishing agent supply unit (54) connected to the spraying tube (65) through an agent supply pipe (55), the fire extinguishing agent supply unit (54) being configured to supply the fire extinguishing agent to the spraying tube (65) such that the fire extinguishing agent pushes the plug (67) out of the spraying tube (65) and is sprayed into the battery module (17).

7. The fire extinguishing agent spraying apparatus (50) as claimed in claim 6, further comprising a tube heating unit comprising the heating element (69) and a power supply unit (51a) [0083] and configured to transfer heat to the plug (67) through the spraying tube (65) to thereby melt the plug (67) and expedite separation of the plug (67) from the spraying tube (65),
wherein the spraying tube (65) is made of a metal and the plug (67) is made of a plastic material that is meltable.

8. The fire extinguishing agent spraying apparatus (50) as claimed in claim 7, wherein
the heating element (69) is fixed to an outer circumferential surface of the spraying tube (65); and
the power supply unit (51a) is connected to the heating element (69) through a power line (52) and configured to apply power to the heating element (69) to heat the heating element (69).

9. The fire extinguishing agent spraying apparatus (50) as claimed in any of claims 6 to 8, wherein the agent supply pipe (55) comprises:
a pressure adjuster (56) configured to adjust a flow pressure of the fire extinguishing agent being supplied to the spraying tube (65);
a pressure sensor (57) configured to detect an internal pressure of the agent supply pipe (55); and
a controller (58) connected to the pressure sensor (57) and configured to control the pressure adjuster (56).

10. The fire extinguishing agent spraying apparatus (50) as claimed in claim 9, further comprising:
an air compressor (71) configured to inject compressed air into a compressed air pipe (71a); and
a valve that opens or closes the agent supply pipe (55), with the valve being installed between the spraying unit (60) and the pressure adjuster (56),
wherein the compressed air pipe (71a) is connected between the spraying unit (60) and the valve, and
wherein the air compressor (71) is configured to inject the compresses air into the compressed air pipe (71a) when the valve is closed.

11. The fire extinguishing agent spraying apparatus (50) as claimed in any of claims 6 to 10, further comprising:
a suction body (81) to be mounted on the battery module (17) and configured to suction gas inside the battery module (17) when the fire extinguishing agent is sprayed from the spraying tube (65); and
a vacuum pump (83) configured to provide a negative pressure to the suction body (81).

12. The fire extinguishing agent spraying apparatus (50) as claimed in any of claims 8 to 11, wherein
the heating pipe (66) is configured to transfer heat from the heating element (69) to the plug (67).

13. The fire extinguishing agent spraying apparatus (50) as claimed in any of claims 8 to 12, wherein
the heat receiver (68) is configured to transfer the heat to the plug (67).

14. A method of spraying a fire extinguishing agent into a battery module (17) using a fire extinguishing agent spraying apparatus (50) comprising a spraying tube (65) having an internal passage through which the fire extinguishing agent passes and which sprays the fire extinguishing agent into the battery module (17), a plug (67) that blocks the internal passage of the spraying tube (65) and is separated from the spraying tube (65) by an external force, a fire extinguishing agent supply unit (54) that supplies the fire extinguishing agent to the spraying tube (65) so that the fire extinguishing agent pushes the plug (67) out of the spraying tube (65) and is sprayed into the battery module (17), and a tube heating unit that transfers heat to the plug (67) to melt the plug (67) to expedite separation of the plug (67) from the spraying tube (65), the method comprising:
a monitoring operation (101) of monitoring at least one of a temperature and a voltage of at least one cell inside the battery module (17);
a fire extinguishing agent supply operation of supplying the fire extinguishing agent to the spraying tube (65) when at least one of the temperature and the voltage of the at least one cell is out of a predetermined range; and
an opening expedition operation (105) of expediting opening of the spraying tube (65) using the tube heating unit.

15. The method as claimed in claim 14, further comprising subsequent process of the opening expedition operation (105) an air pushing operation (107) of driving an air compressor (71) to supply compressed air to the spraying tube (65) and apply air pressure to the plug (67),
wherein a pressure adjuster (56) is installed on an agent supply pipe (55) to adjust a flow pressure of the fire extinguishing agent being supplied to the spraying tube (65), a first valve (73) is installed between a spraying unit (60) and the pressure adjuster (56) to open and close the agent supply pipe (55), a compressed air pipe (71a) is connected to the spraying unit (60) and the first valve (73), and the air compressor (71) injects the compressed air to the compressed air pipe (71a) when the first valve (73) is closed, and
wherein the air pushing operation (107) is performed when the first valve (73) is closed.
